# EUROPEAN PATENT APPLICATION

(11) **EP 4 464 169 A1**
(43) Date of publication of application: **20.11.2024**
(21) Application number: 23174034.1
(22) Date of filing: 17.05.2023
(51) Int. Cl.: A23L 2/54, A23L 3/3418, C02F 1/469, B01D 61/44, B01D 61/46, C02F 103/08

(54) **FOOD OR BEVERAGE PRODUCT CONTAINING CARBON DIOXIDE OF ATMOSPHERIC ORIGIN**

(71) Applicant: BASF SE, 67056 Ludwigshafen am Rhein (DE)
(72) Inventor: GARSUCH, Arnd, 67056 Ludwigshafen am Rhein (DE); LARIONOV, Evgeny, 67059 Ludwigshafen am Rhein (DE); HENNIG, Gunnar, 67056 Ludwigshafen am Rhein (DE); BRAEUNINGER, Sigmar, 67056 Ludwigshafen am Rhein (DE)
(74) Representative: Meissner Bolte Partnerschaft mbB

(57) **Abstract**

Carbon dioxide of atmospheric origin extracted from seawater by an electrolytic process is used for the manufacture of a carbon dioxide-containing food or beverage product. The carbon dioxide therefrom contains little or no impurities that need to be removed before use in the food and beverage industry.

## Description

A major consumer of purified carbon dioxide is the carbonated beverage industry, which uses carbon dioxide to carbonate soft drinks, beer and mineral water, thereby stabilizing the taste of the beverages. Carbon dioxide is also used in other ways in manufacturing beverages, e.g., for rinsing and sterilizing bottles and tanks.

Carbon dioxide is also an important "protective gas" for packaged foodstuffs. Modified atmosphere packaging generally refers to the practice of modifying the composition of the internal atmosphere or headspace of a package in order to improve the shelf-life of the product. Carbon dioxide displaces oxygen in the closed package and thus suppresses degradation and spoilage processes. Carbon dioxide also inhibits the activity of most microorganisms such as mold and aerobic bacteria by lowering the pH value of the food surface. Furthermore, slaughterhouses use food-grade carbon dioxide to stun animals. Carbon dioxide in the form of dry ice is also used for refrigeration during food transportation.

Industrial gases used in food production are considered food additives. Carbon dioxide destined for use in food and beverage products is required to meet certain quality requirements. In particular, manufacturers are guided by the criteria of the International Society of Beverage Technologists (ISBT) guideline, which sets limits for various contaminants and their analytical detection in carbon dioxide.

Generally, for commercial purposes, the carbon dioxide final product on a volume basis should have no more than about 35 parts per million of methane and preferably no more than about 5 to 10 parts per million of methane, less than 10 parts per million of carbon monoxide, no greater than 5 parts per million of sulfur dioxide, preferably no more than about 0.1 part per million of hydrogen sulfide, a maximum of 0.5 part per million of carbonyl sulfide with a total sulfur content of no more than about 1 part per million and preferably no more than about 0.5 part per million total sulfur.

Carbon dioxide meeting food grade specifications has for the most part been a byproduct of ammonia and hydrogen plants. It is produced in comparatively pure form in the Haber-Bosch process, which is why this source is preferred because further purification of the gas involves less capital and operational expenditure.

Recently, however, many of the existing plants for producing ammonia and/or hydrogen streams have been taken off stream because of the steadily increasing cost of natural gas which shows no present sign of abating. Furthermore, the demand for fertilizer products has declined as farmers have been required to find ways of more efficiently utilizing the nutrients which they return to the soil. Closing of the traditional sources of food grade carbon dioxide coupled with increased demand therefor in the beverage industry has created a shortage of food grade carbon dioxide resulting in inflated prices in the marketplace.

Natural gas streams often contain quantities of carbon dioxide in varying amounts which in some instances are substantial proportions of the well head product. However, it is expensive to remove contaminants in natural gas carbon dioxide sources to an extent that food grade specifications can be met.

The present invention seeks to advise a feed stream useful for producing food grade carbon dioxide therefrom, containing little or no impurities that need to be removed before use in the food and beverage industry.

The invention relates to a food or beverage product containing carbon dioxide of atmospheric origin extracted from seawater by an electrolytic process.

The invention further relates to the use of carbon dioxide of atmospheric origin extracted from seawater by an electrolytic process for the manufacture of a carbon dioxide-containing food or beverage product.

The invention further relates to a process for the manufacture of carbon dioxide-containing food or beverage product, comprising (i) extracting carbon dioxide of atmospheric origin from seawater by an electrolytic process, and (ii) introducing the carbon dioxide thus obtained in a food or beverage product or the packaging thereof.

"Carbon of atmospheric origin" as used herein refers to carbon atoms from carbon dioxide molecules that have recently, in the last few decades, been free in the earth's atmosphere. Such carbons in mass are identifiable by the presence of particular radioisotopes.

"Carbon of fossil origin" refers to carbon of petrochemical origin. Such carbon has not been exposed to UV rays as atmospheric carbon has, therefore such carbons in mass have few radioisotopes in their population.

Suitably, the food or beverage product is selected from a carbonated beverage, such as soft drinks, beer and mineral water, and a food product enclosed by a protective atmosphere packaging.

In an embodiment, the electrolytic process is powered at least partially by electric energy from renewable energy sources. Renewable energy sources include wind, solar photovoltaic, solar thermal, hydroelectric, tidal hydroelectric, wave action hydroelectric, nuclear, and geothermal. The process according to the invention collects CO₂ from the atmosphere, and the use of electric energy from renewable energy sources can render the process carbon-neutral or even carbon-negative.

The ocean is a natural system that absorbs carbon dioxide from the atmosphere and stores it. The ocean's pH value is kept relatively constant at approximately 7.8 by a complex carbonate buffer system. 96% of the carbon in the oceans is in the form of HCO₃⁻. In order to convert HCO₃⁻ to H₂CO₃, the pH value of seawater must be lowered.

CO₂ dissolved in water is in equilibrium with H₂CO₃. The hydration equilibrium constant is 1.70×10⁻³. This indicates that H₂CO₃ is not stable and gaseous CO₂ readily dissociates at a pH value of 4.5, allowing CO₂ to be easily removed by degassing once the seawater has been acidified to ensure that the unstable H₂CO₃ is the predominant carbonate species.

The basic operating principle of an electrolytic process for CO₂ capture is to push the CO₂/bicarbonate equilibrium toward dissolved CO₂ by acidifying the seawater by an electrochemical acidification cell that is able to decompose water into H⁺ and OH⁻ by means of electrical energy. The dissolved CO₂ may then be desorbed from the acidified seawater, e.g., by passing the acidified stream through a liquid-gas membrane contactor, which captures the gaseous CO₂ from the dissolved CO₂ in the aqueous stream.

Currently, electrodialysis is carried out in stacks with alternating ion-selective membranes, sandwiched between electrodes. A hydrogen evolution reaction proceeds on the anode, and oxygen evolution reaction proceeds on the cathode. This creates a charge imbalance at the electrodes that is balanced by the movement of ions through strategically placed ion-selective membranes.

In preferred embodiments, the electrolytic process comprises:
flowing seawater into a bipolar membrane electrodialysis cell having at least two compartments separated by membranes,
flowing an electrolyte solution into the electrodialysis cell across electrodes in the electrodialysis cell;
applying a voltage to the electrodialysis cell so as to obtain acidified seawater and basified seawater, wherein dissolved CO₂ is generated in the acidified seawater;
desorbing the CO₂ out of the acidified seawater.

Conveniently, the acidified seawater and the basified seawater are then combined such that the pH value of the solution is 7.8 to 8.4 which is approximately the pH of the seawater taken from the ocean; and the solution is discharged.

Such processes are known per se and are described, *inter alia,* in Heather D. Willauer et al., Energy Fuels 2017, 31, 1723-1730, Matthew D. Eisaman et al., Energy Environ. Sci., 2012, 5, 7346, Ibadillah A. Digdaya et al., Nature Communications, 2020, 11, 4412, and Litao Yan et al., ACS Energy Letters, 2022, 7, 6, 1947.

Bipolar membrane electrodialysis (BPMED) converts aqueous salt solutions into acids and bases. Currently available BPMED apparatuses include an electrodialysis membrane stack made up of at least one electrodialysis cell. The electrodialysis cell includes at least one bipolar membrane (BPM) such that, when an electrical potential is applied across the cell, the dissociation of water into hydrogen ions (H⁺) and hydroxide ions (OH⁻) occurs.

A BPMED membrane stack can have either a two-compartment or a three-compartment configuration. In a two-compartment configuration, adjacent membranes may alternate between BPM and anion exchange membrane (AEM) to form a membrane stack of the form BPM, AEM, BPM, AEM, etc.; or adjacent membranes may alternate between BPM and cation exchange membrane (CEM) to form a membrane stack of the form BPM, CEM, BPM, CEM, etc.

In a three-compartment configuration, adjacent membranes may cycle from BPM to AEM to CEM, forming a membrane stack of the form BPM, AEM, CEM, BPM, AEM, CEM, etc.

The spaces between membranes form compartments. For any of these configurations, each of the end membranes at the two ends of the membrane stack may be an AEM, CEM, or BPM, depending on the configuration and process conditions.

The repeating cell stacks are grouped together in an electrodialysis cell with a single pair of electrodes at the outer ends. The electrodialysis cell comprises an anode compartment and a cathode compartment. An arbitrary number of repeating cell stacks can be employed, such as 1 to 200. Preferably, 5 to 100 of repeating cell stacks are used.

The term "bipolar membrane" as used in this application means a functional membrane through which only hydrogen ions are permeable and other cations or anions are impermeable, and which is a hybrid membrane composed of laminated cation-exchange membrane and anion-exchange membrane. When an electric potential gradient is applied to the bipolar membrane, water is decomposed to form protons and hydroxyl groups, and the protons and hydroxyl groups move towards the cathode side and the anode side, respectively. Simultaneously, the constituent cations and anions of an input salt solution are separated under the applied electrical potential via ion exchange membranes - either AEMs, CEMs, or some combination of the two. The OH⁻ (H⁺) ions "produced" by the BPM then combine with the cations (anions) separated from the input salt solution to produce basic (acidic) output solutions containing the parent acid and base of the input salt. In a membrane stack composed of one or more "three-compartment" cells, a diluted salt solution may also be produced as output in addition to the acid and base output solutions.

Electrodialysis without bipolar membranes is also possible, and consists of a two-compartment configuration formed by an alternating series of AEM and CEM to form a membrane stack of the form AEM, CEM, AEM, CEM, AEM, etc.

Useful cation exchange membranes may comprise, e.g., sulfonic acid groups. The cation exchange membrane should be stable and have a low resistance to the cation being transported. Representative examples of useful cation exchange membranes, in addition to the sulfonic acid membranes, include perfluorinated radiation grafted materials, such as Pall Raipore or Solvay Morgane products and fully perfluorinated sulfonic acid cation exchange membranes, such as those available from DuPont under the Nafion Trademark, such as the Nafion 300 and 400 series membranes. Cation exchange membranes for use herein also include membranes under the FUMASEP^{®} trade designation, such as FUMASEP^{®} FKS and FKE. Suitable cation exchange membranes can be obtained from Tokuyama such as Tokuyama CMX, CMS and CMB.

Representative anion exchange membranes include polystyrene-polydivinyl-benzene polymeric base materials, such as Tokuyama Neosepta AMH or Asahi Glass Selemion AMV, and perfluorinated radiation grafted materials, such as Pall Raipore. Solvay Morgane products may also be used. Anion exchange membranes for use herein include membranes under the FUMASEP^{®} trade designation, such as FUMASEP^{®} FAS and FAB. Suitable anion exchange membranes also include Tokuyama NEOSEPTA^{®} membranes such as Tokuyama AMX, AMH and ACM.

As examples of commercially available bipolar membranes may be mentioned Selemion HSV (manufactured by Asahi Glass Co., Ltd.), Neosepta BP1E (manufactured by Tokuyama Corporation), and Fumasep FBM (manufactured by FuMA-Tech GmbH).

Electrodes, i.e., anode and cathode, can be made of different materials, such as platinum, stainless steel, titanium, platinum on carbon/graphite, graphite or iron. In view of the lower capital expenditure costs, electrodes made of graphite or carbon felts are preferably used.

The unintended water-splitting reaction, i.e., hydrogen evolution reaction (HER) at the cathode and oxygen evolution reaction (OER) at the anode involves an energetic penalty because energy is required to do so and results in additional voltage loss and additional electrochemical energy consumption for CO₂ removal. Hence, in preferred embodiments, the HER and OER at the electrodes is replaced with reversible redoxcouple reactions with minimal thermodynamic and kinetic voltage losses.

A solution of a redox-active electrolyte material is used as anolyte and catholyte in the anode compartment or cathode compartment, respectively. A redox-active electrolyte material or redox couple can exist as a reduced and oxidized species.

In one embodiment, the redox-active-active electrolyte material is configured to drive a cation component from the anode compartment and to accept a cation component in the cathode compartment. These may be termed negatively charged redox-active electrolyte materials.

Useful negatively charged redox-active electrolyte materials may be selected from Fe²⁺/Fe³⁺ redox couple, such as hexacyanoferrate(ll) / hexacyanoferrate(III); Zn²⁺/Zn redox couple; p-quinone compounds, such as quinones, naphthaquinones, anthraquinones; o-quinone compounds; thiazine compounds; NO radicals, such as (2,2,6,6-tetramethylpiperidin-1-yl)oxyl, 5,5-dimethyl-1-pyrroline N-oxide, phthalimide N-oxyl; alloxane compounds; flavine compounds; phenazine compounds.

In another embodiment, the redox-active electrolyte material is configured to drive an anion component from the cathode compartment and to accept an anion component in the anode compartment. These may be termed positively charged redox-active electrolyte materials.

Useful positively charged redox-active electrolyte materials may be a selected from ferrocene derivatives, pyridinium compounds, such as FeCl₂ / FeCl₃ redox couple; pyridinium derivatives, 4,4'-bipyridyl compounds such as viologens; thiazine compounds; flavine compounds; NO radicals, such as (2,2,6,6-tetramethylpiperidin-1-yl)oxyl, 5,5-dimethyl-1-pyrroline N-oxide, phthalimide N-oxyl; alloxane compounds; flavine compounds; quinone compounds, such as p-quinones, naphthaquinones, anthraquinones; o-quinone compounds; phenazine compounds.

Examples of ferrocene derivatives include (bis(η5-cyclopentadienyl)iron) or a derivative thereof, including, e.g., functionalised derivatives such as ferrocene monocarboxylic acid, 1,1'-bis(trimethylammoniopropyl)ferrocene dichloride (BTMAP-Fc) or polymeric forms (polyferrocenes).

Viologens are derivatives of 4,4'-bipyridyl. Examples of viologen are methyl viologen, ethyl viologen, and benzyl viologen. These viologens have been isolated as, e.g., chloride, acetate, tetraflurorborate, perchlorate, triflurormethanesulfonate, tetraphenylborate, and hexaflurophosphate salts.

During the electrodialysis process, electrolyte solution which is a solution of redox-active electrolyte material is flowed through the electrode compartments. Generally, the solution is circulated between the anode compartment and the cathode compartment during the operation mode.

Desorption of the CO₂ from the acidified solution can occur via several ways. The acidified solution may flow through a CO₂ desorption unit, which is connected to a vacuum pump so that CO₂ gas can be actively extracted from the acidified solution as it passes through the CO₂ desorption unit. The vacuum pump may be connected to a CO₂ collection unit, such as a tank, that collects the extracted CO₂.

In an embodiment, the CO₂ desorption unit consists of one or more membrane contactors in series. In another embodiment, the CO₂ desorption unit is a tank with a means of agitating the solution, for example, a showerhead fixture. It will be appreciated that other means for agitating the acidified solution and/or mixing the gas headspace in the acidified solution tank may also be used.

Alternatively, the CO₂ gas may passively evolve from the acidified solution in an acidified solution tank, and may be collected in a CO₂ collection unit attached to the acidified solution tank. The system may include means for agitating the acidified solution in the acidified solution tank such that CO₂ gas is actively evolved from the acidified solution.

Once the acidified and basified solutions flow from the BPMED apparatus and into acidified and basified solution tanks, the acidified and basified solutions may be flowed back into the BPMED apparatus. In this manner, the process solution is flowed through the apparatus more than one time.

When the acidified and basified solutions are recombined, they once again become neutralized, and the seawater can be pumped directly back into the sea. Because no additional chemicals need to be added to the solution, pumping the neutralized solution back into the sea will have little to no harmful effects.

The extracted CO₂ gas stream is obtained in comparatively pure form, free of toxic contaminants or contaminants that are otherwise detrimental to the use thereof in foods or beverages. The extracted CO₂ gas stream may contain minor amounts of nitrogen or oxygen, but this may be acceptable for food-grade applications. The amount of dissolved oxygen and nitrogen gas in the input seawater can be calculated using Henry's Law and the salinity of the brine. If desired, dissolved oxygen and nitrogen may be vacuum stripped from the seawater, e.g., using membrane contactors, prior to entering the acidification compartment.

The carbon dioxide captured from seawater may exhibit a higher moisture level when compared to CO₂ made by traditional process or be saturated with water, but this may be acceptable for food-grade applications. If necessary, an additional drying step may be required.

If seawater experiences high pH-levels, this may ultimately lead to the formation of insoluble precipitates due to the presence of hardness-forming cations, such as Mg²⁺ and Ca²⁺, in the natural seawater. At higher pH values, the hardness-forming cations may form precipitates of, e.g., magnesium hydroxide or calcium carbonate. The precipitates can block the membrane and the cathode in an electrochemical cell. As a consequence, in preferred embodiments, hardness-forming cations are removed from the seawater. The seawater may be partially purified before charging into the electrolysis or electrodialysis system. The purification can be achieved, e.g., by reverse osmosis, nanofiltration and/or ion exchange.

The invention is further illustrated by the appended drawing and the examples that follow.
Fig. 1 illustrates a redox-assisted electrodialysis system useful in the process of the invention.
Fig. 2 illustrates the ion movements across membranes in the electrodialysis system of Fig. 1

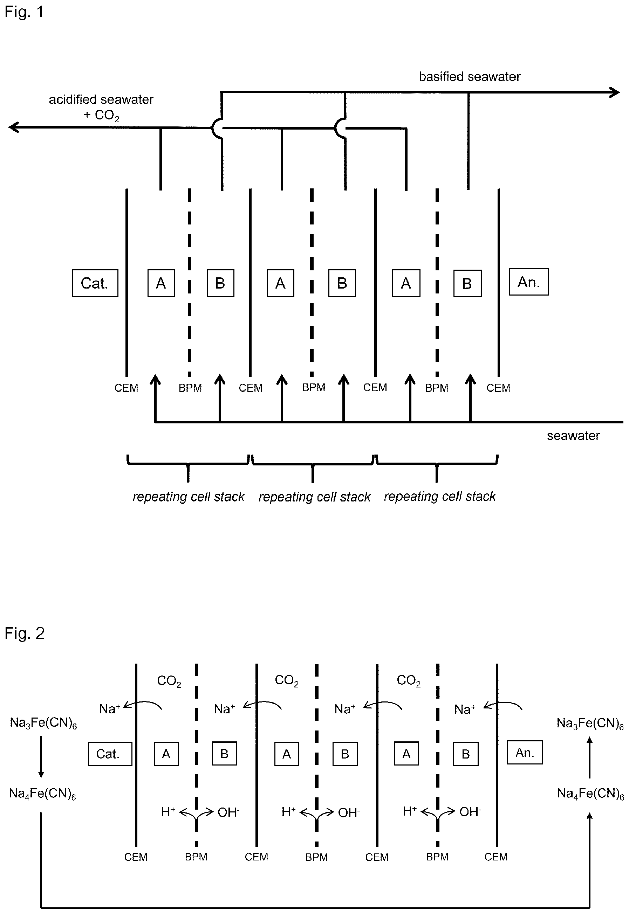

Fig. 1 illustrates a redox-assisted electrodialysis system with a negatively charged redox shuttle (i.e., hexacyanoferrate (II) and hexacyanoferrate (III) mixture). The BPMED cell comprises two seawater compartments separated by a bipolar membrane (BPM), two reversible redox-couple compartments, each separated from the seawater compartment by a cation exchange membrane (CEM), and two electrode compartments (An., Cat.) for electrochemical reactions.

The anode compartment (An.) and cathode compartment (Cat.) house an anode or cathode, respectively, and a solution of a redox-active electrolyte material. Movement of the redox-active electrolyte material from the anode compartment (An.) to the cathode compartment (Cat.) is not shown.

Fig. 2 illustrates the ion movements across membranes in the electrodialysis system. Seawater is flowed into the seawater compartments. Sodium ions cross membranes CEM to enter the basified stream, while protons or hydroxyl groups are supplied across the bipolar membranes.

### Example

This example uses a BPMED unit as schematically shown in Fig. 1. The plant includes a desalination unit based on reverse osmosis for removal of hardness-forming cations (not shown in Fig. 1). The BPMED unit consists of repeating units (5 to 100 repeating cell stacks), each of them containing a CEM and a BPM, whereas between the first membrane and electrode, as well as between the last membrane and electrode, one more CEM is used. The spaces between membranes form compartments. The following membranes are used: cation-exchange membrane Fumasep FKB-PK-130 and bipolar membrane Fumasep FBM-PK.

As electrode solution, a solution of hexacyanoferrate (II) and hexacyanoferrate (III) mixture is used. Redox-couple is dissolved in water in overall concentration (reduced and oxidized form) 0.1 M to 0.6 M, but preferably 0.1 M to 0.4 M. Electrodes can be made of different materials but preferentially of graphite or carbon felts.

During the electrodialysis process, electrolyte solution is flowed through the electrode compartment, whereas seawater solution is flowed through the acid and base compartments. An appropriate current is applied to the cell, and voltage is measured.

Conductivities and pH values of base and acid streams are continuously monitored. The acidifed seawater is directed toward a series of membrane contactors (e.g. from 3M, based on hollow fiber, not shown in Fig. 1) for removal of dissolved CO₂ by a vacuum pump.

Energy consumption is calculated from the measured voltage value.

### Example 2

Example 1 is repeated, but a salt solution (e.g., Na₂SO₄ or a mixture of Na₂SO₄ and H₂SO₄) is flowed in the electrode compartments. Electrodes can be made from different materials, such as platinum, steel, titanium, platinum on carbon/graphite, or graphite.

## Claims

1. Food or beverage product containing carbon dioxide of atmospheric origin extracted from seawater by an electrolytic process.

2. Food or beverage product according to claim 1, selected from a carbonated beverage and a food product enclosed by a protective atmosphere packaging.

3. Food or beverage product according to claim 1 or 2, wherein the electrolytic process is powered by electric energy from renewable energy sources.

4. Food or beverage product according to any one of the preceding claims, wherein the electrolytic process comprises:
flowing seawater into a bipolar membrane electrodialysis cell having at least two compartments separated by membranes;
flowing an electrolyte solution into the electrodialysis cell across electrodes in the electrodialysis cell;
applying a voltage to the electrodialysis cell so as to obtain acidified seawater and basified seawater, wherein dissolved CO₂ is generated in the acidified seawater;
and
desorbing the CO₂ out of the acidified seawater.

5. Food or beverage product according to claim 4, comprising combining the acidified seawater and the basified seawater so as to obtain a seawater solution having an approximately neutral pH value; and discharging the seawater solution.

6. Food or beverage product according to claim 4 or 5, wherein the electrolyte solution is a solution of a redox-active electrolyte material.

7. Food or beverage product according to any one of claims 4 to 6, comprising removing hardness-forming cations from the seawater.

8. The use of carbon dioxide of atmospheric origin extracted from seawater by an electrolytic process for the manufacture of a carbon dioxide-containing food or beverage product.

9. A process for the manufacture of carbon dioxide-containing food or beverage product, comprising (i) extracting carbon dioxide of atmospheric origin from seawater by an electrolytic process, and (ii) introducing the carbon dioxide thus obtained in a food or beverage product or the packaging thereof.
